Europäisches Patentamt

European Patent Office

Office européen des brevets

(19)

(11)  **EP 0 817 425 A2**

(12)  **EUROPÄISCHE PATENTANMELDUNG**

(43) Veröffentlichungstag:
07.01.1998  Patentblatt 1998/02

(51) Int. Cl.⁶: $H04L\ 12/40$, $H04L\ 12/26$

(21) Anmeldenummer: 97106439.9

(22) Anmeldetag: 18.04.1997

(84) Benannte Vertragsstaaten:
CH DE FR GB IT LI

(30) Priorität: 03.07.1996 DE 19626675

(71) Anmelder: ROBERT BOSCH GMBH
70442 Stuttgart (DE)

(72) Erfinder:
• Sauer, Klaus, Dr.
60488 Frankfurt (DE)
• Freitag, Hans-Otmar
61130 Nidderau (DE)
• Keles, Burhan
64285 Darmstadt (DE)

(54)  **Verfahren zur Synchronisation**

(57)  Bei einem Verfahren zur Synchronisation von Anpassungsschaltungen eines Kommunikationssystems mit mehreren Modulen, die über serielle Datenleitungen miteinander verbunden sind, wobei als Schnittstellen zwischen den Datenleitungen und jeweils einer Anpassungsschaltung der Module Sender und Empfänger dienen, wobei mindestens eine der Anpassungsschaltungen von einer anderen synchronisiert wird und die dazu erforderlichen Signale über die Datenleitung übertragen werden, wobei die Sender von der jeweiligen Anpassungsschaltung zugeführte parallele Signale in serielle Signale umwandeln und der jeweiligen Datenleitung zuführen und die Empfänger, die über die jeweiligen Datenleitungen übertragenen seriellen Signale in parallele Signale umwandeln und der jeweiligen Anpassungsschaltung zuführen und wobei die Empfänger beim Erkennen von Übertragungsfehlern eine Fehlermeldung abgeben, ist vorgesehen, daß bei Abgabe von mindestens zwei Fehlermeldungen innerhalb einer vorgegebenen Zeit die an den jeweiligen Empfänger angeschlossene Anpassungsschaltung zurückgesetzt wird.

EP 0 817 425 A2

## Beschreibung

Die Erfindung betrifft ein Verfahren zur Synchronisation von Anpassungsschaltungen eines Kommunikationssystems mit mehreren Modulen, die über serielle Datenleitungen miteinander verbunden sind, wobei als Schnittstellen zwischen den Datenleitungen und jeweils einer Anpassungsschaltung der Module Sender und Empfänger dienen, wobei mindestens eine der Anpassungsschaltungen von einer anderen synchronisiert wird und die dazu erforderlichen Signale über die Datenleitung übertragen werden, wobei die Sender von der jeweiligen Anpassungsschaltung zugeführte parallele Signale in serielle Signale umwandeln und der jeweiligen Datenleitung zuführen und die Empfänger, die über die jeweiligen Datenleitungen übertragenen seriellen Signale in parallele Signale umwandeln und der jeweiligen Anpassungsschaltung zuführen und wobei die Empfänger beim Erkennen von Übertragungsfehlern eine Fehlermeldung abgeben.

Zur seriellen Übertragung von Daten über Lichtwellenleiter oder Koaxialkabel sind Schnittstellenschaltungen erhältlich, bei denen die Daten und Zusatzinformationen (Kommandos) parallel einem Sender zugeführt werden können und empfängerseitig die seriellen Daten in parallele Signale umgewandelt werden. Werden solche Schnittstellenschaltungen zur Übertragung von Daten zwischen verschiedenen Modulen eines Kommunikationssystems (Vermittlungssystems) verwendet, so ist zwischen dem jeweiligen Modul, insbesondere einem zur Datenübertragung innerhalb des Moduls erforderlichen Bus, und der Schnittstellenschaltung eine Anpassungsschaltung erforderlich. Ein solches Kommunikationssystem ist beispielsweise in der Patentanmeldung P 43 24 201.4 beschrieben.

Die Datenübertragung setzt allerdings außer einer Synchronisation zwischen Sender und Empfänger eine Synchronisation zwischen den Anpassungsschaltungen der verschiedenen Module voraus. Ist ersteres nicht der Fall, beispielsweise in einer Initialisierungsphase nach dem Einschalten oder nach einer Störung, liefern die Schnittstellenschaltungen jedoch undefinierte Kommandosignale, welche die Synchronisation der Anpassungsschaltungen stören und zu einem Fehlverhalten der gesamten Übertragungsstrecke führen können.

Aufgabe der Erfindung ist es daher, ein Verfahren zur Synchronisation von Anpassungsschaltungen anzugeben, das nach Einschalten der Betriebsspannung, nach Ausfall und Wiederinbetriebnahme eines Moduls und nach dem Rücksetzen einer die anderen Anpassungsschaltungen synchronisierenden Anpassungsschaltung wirksam ist.

Diese Aufgabe wird erfindungsgemäß dadurch gelöst, daß bei Abgabe von mindestens zwei Fehlermeldungen innerhalb einer vorgegebenen Zeit die an den jeweiligen Empfänger angeschlossene Anpassungsschaltung zurückgesetzt wird. Dabei ist vorzugsweise die vorgegebene Zeit etwa 2 $\mu$s, während die synchronisierte Anpassungsschaltung vorzugsweise etwa 6 $\mu$s lang zurückgesetzt bleibt.

Als Schnittstellenschaltungen eignen sich vorzugsweise die integrierten Schaltungen Am7968 und Am7969 des Herstellers Advanced Micro Devices, die vom Hersteller auch als Transparent Asynchronous Xmitter-Receiver Interface, abgekürzt TAXI, bezeichnet werden.

Schnittstellenschaltungen dieser Art geben bei Unterbrechung der seriellen Datenleitung im allgemeinen empfängerseitig vorgegebene Daten aus, beispielsweise $F_{hex} = 1111_{dual}$. Um im Falle einer Unterbrechung eine Weiterleitung von fehlerhaften Daten zu gewährleisten und nach der Unterbrechung eine Synchronisation zu ermöglichen, ist daher gemäß einer Weiterbildung vorgesehen, daß die Anpassungsschaltung ferner beim Eintreffen der vorgegebenen Daten zurückgesetzt wird.

Eine andere Weiterbildung des erfindungsgemäßen Verfahrens besteht darin, daß die Anpassungsschaltung ferner zurückgesetzt wird, wenn eine vorgegebene Anzahl von aufeinander folgenden Taktimpulsen eines über den Empfänger zugeführten Rahmentaktes fehlt.

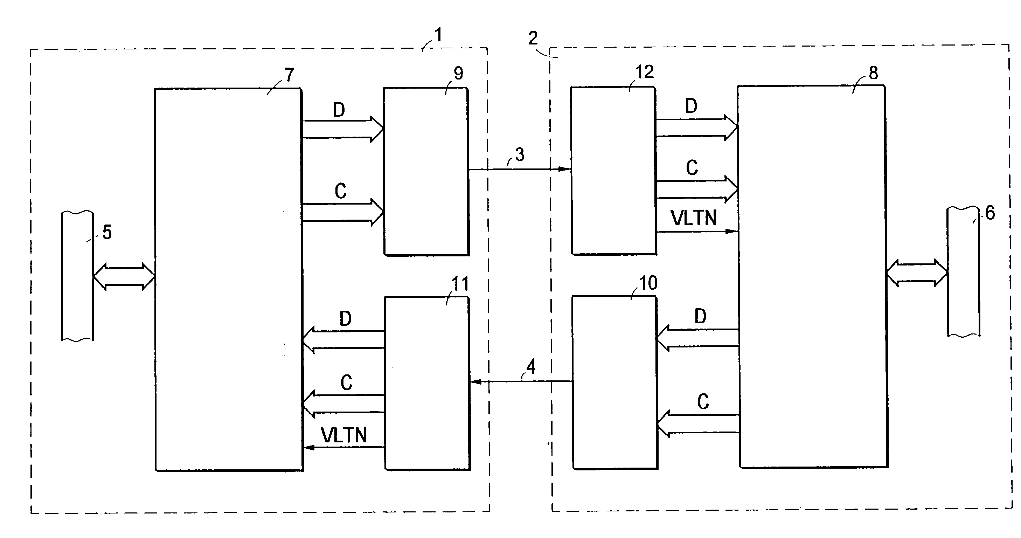

Ein Ausführungsbeispiel der Erfindung ist in der Zeichnung anhand eines Blockschaltbildes einer Anordnung zur Durchführung des erfindungsgemäßen Verfahrens dargestellt und in der nachfolgenden Beschreibung näher erläutert.

Bei dem Ausführungsbeispiel sind zwei Module 1, 2 eines Vermittlungssystems über zwei serielle Datenleitungen 3, 4 miteinander verbunden. Von den Modulen 1, 2, die jeweils ein Koppelfeld, Steuereinrichtungen und Anschlußschaltungen für Anschlußleitungen umfassen, sind lediglich die zum Verständnis der Erfindung erforderlichen Teile, nämlich jeweils ein Bus 5, 6 und eine Anpassungsschaltung 7, 8, dargestellt. Die Anpassungsschaltungen 7, 8 dienen im wesentlichen als Schnittstellen zwischen den Bussystemen 5, 6 einerseits und den Sendern 9, 10 und Empfängern 11, 12 des seriellen Datenübertragungssystems andererseits, während die Sender und Empfänger Schnittstellen zwischen den seriellen Datenleitungen 3, 4 und den Anpassungsschaltungen 7, 8 darstellen. Eine genauere Beschreibung eines aus Modulen aufgebauten Vermittlungssystems ist der eingangs erwähnten Patentanmeldung P 43 24 201.4 entnehmbar.

Die Sender 9, 10 haben jeweils 14 parallele Eingänge, von denen acht, neun oder zehn für Daten D und die jeweils restlichen Eingänge für Kommandos C verwendet werden können. Zur Datenübertragung ist eine Synchronisation der Empfänger auf die Sender erforderlich, worauf die Synchronisation der Module auf ein synchronisierendes Modul (Mastermodul) erfolgt. In dem Mastermodul, beispielsweise in dem Modul 1, wird ein Rahmentakt generiert, der über den Kommandokanal des Senders 9 codiert zu dem synchronisierten Modul 2 gesendet wird. Der Rahmentakt kann den Kommandoausgängen des Empfängers 12 entnommen werden, worauf eine nicht dargestellte PLL-Schaltung in der Anpassungsschaltung 8 sich auf den Rahmentakt synchronisiert.

Eine Synchronisation oder Resynchronisation ist nach folgenden Ereignissen erforderlich:

1. nach Einschalten der Betriebsspannung,
2. nach Rücksetzen von Baugruppen in einem der Module,
3. nach Ausfall und Wiederinbetriebnahme eines Moduls,
4. nach Unterbrechung und Wiederverbindung der Übertragungsstrecke und
5. nach Ausfall des Rahmentaktes.

Nach dem unter 1. genannten Einschalten der Betriebsspannung generiert der Empfänger 12 an einem dafür vorgesehenen Ausgang Fehlermeldungen VLTN (Violation), bis er auf den Sender 9 synchronisiert ist. Da es sich bis dahin nicht um eine sinnvolle Signalübertragung handelt, werden während dieser Zeit vom Empfänger 12 gehäuft Fehlermeldungen VLTN erzeugt. Um diesen Fall von einem auch im normalen Betrieb auftretenden Übertragungsfehler zu unterscheiden, wird mit dem Erkennen der ersten Meldung ein Zeitfenster von 2 μs Dauer gestartet. Wenn innerhalb dieses Zeitfensters eine weitere von dem Empfänger 12 erzeugte Fehlermeldung in der Anpassungsschaltung 8 eintrifft, wird ein Rücksetzsignal (Reset) ausgelöst, das 6 μs lang die entsprechenden Teile der Anpassungsschaltung zurücksetzt. Wenn innerhalb des Zeitfensters keine zweite Fehlermeldung empfangen wird, wird das Zeitfenster wieder geschlossen.

Nach jedem Reset in einem Modul gemäß Ziffer 2 müssen sich die Sender und Empfänger der Übertragungsstrecke neu aufeinander synchronisieren. Während dieser Zeit generieren die Empfänger 12, 11 ebenfalls gehäuft Fehlermeldungen VLTN, die in bereits beschriebener Weise zu einem Reset der jeweiligen Anpassungsschaltung 8, 7 führen.

Bei einer Wiederinbetriebnahme eines Moduls nach einem Ausfall gemäß Ziffer 3 sind die Sender und Empfänger einer Übertragungsstrecke ebenfalls neu zu synchronisieren. Auch hierbei treten häufig Fehlermeldungen VLTN auf, die zu einem Reset der jeweiligen Anpassungsschaltung führen.

Bei einer Unterbrechung der Übertragungsstrecke gemäß Ziffer 4 liefert der Empfänger 11, 12 einen vorgegebenen Wert, beispielsweise den Code "$F_{hex}$" an den für das Kommandosignal vorgesehenen Ausgängen. Die Anpassungsschaltung 8 erkennt diesen Wert und löst ein Reset aus. Nach der Verbindung der Übertragungsstrecke erzeugt der Empfänger zunächst wieder Fehlermeldungen, die wiederum zu einem Reset führen, bis keine Fehlermeldungen mehr vorliegen oder nur vereinzelt Fehlermeldungen auftreten.

In der Anpassungsschaltung 8 des zu synchronisierenden Moduls 2 werden die Rahmentakte überwacht. Nach Empfang des ersten Rahmentaktes werden alle betroffenen Schaltungsteile zurückgesetzt. Ein Zähler, der mit dem ersten empfangenen Rahmentakt gestartet wird, gibt die zeitliche Lage der nächst folgenden Rahmentakte vor. Werden nacheinander drei Rahmentakte in der richtigen zeitlichen Lage empfangen, so ist die Synchronisation der Übertragungsstrecke erfolgt. Fehlen jedoch die Impulse für den Rahmentakt dreimal hintereinander, so wird ein Synchronisationsverlust festgestellt. Dadurch wird ein Reset ausgelöst.

## Patentansprüche

1. Verfahren zur Synchronisation von Anpassungsschaltungen eines Kommunikationssystems mit mehreren Modulen, die über serielle Datenleitungen miteinander verbunden sind,

   - wobei als Schnittstellen zwischen den Datenleitungen und jeweils einer Anpassungsschaltung der Module Sender und Empfänger dienen,
   - wobei mindestens eine der Anpassungsschaltungen von einer anderen synchronisiert wird und die dazu erforderlichen Signale über die Datenleitung übertragen werden,
   - wobei die Sender von der jeweiligen Anpassungsschaltung zugeführte parallele Signale in serielle Signale umwandeln und der jeweiligen Datenleitung zuführen und die Empfänger, die über die jeweiligen Datenleitungen übertragenen seriellen Signale in parallele Signale umwandeln und der jeweiligen Anpassungsschaltung zuführen und
   - wobei die Empfänger beim Erkennen von Übertragungsfehlern eine Fehlermeldung abgeben,
   dadurch gekennzeichnet,
   - daß bei Abgabe von mindestens zwei Fehlermeldungen innerhalb einer vorgegebenen Zeit die an den jeweiligen Empfänger angeschlossene Anpassungsschaltung zurückgesetzt wird.

2. Verfahren nach Anspruch 1, dadurch gekennzeichnet, daß die vorgegebene Zeit etwa 2 μs ist.

3. Verfahren nach einem der Ansprüche 1 oder 2, dadurch gekennzeichnet, daß die synchronisierte Anpassungsschaltung etwa 6 μs lang zurückgesetzt bleibt.

4. Verfahren nach einem der Ansprüche 1 bis 3, dadurch gekennzeichnet, daß bei einem Empfänger, der bei Unterbrechung der Datenleitung an seinem Ausgang vorgegebene Daten abgibt, die Anpassungsschaltung ferner beim Eintreffen der vorgegebenen Daten zurückgesetzt wird.

5. Verfahren nach einem der Ansprüche 1 bis 4, dadurch gekennzeichnet, daß die Anpassungsschaltung ferner zurückgesetzt wird, wenn eine vorgegebene Anzahl von aufeinander folgenden Taktimpulsen eines über den Empfänger zugeführten Rahmentaktes fehlt.